# EUROPEAN PATENT SPECIFICATION

(11) **EP 3 441 240 B1**
(45) Date of publication and mention of the grant of the patent: **26.08.2020**
(21) Application number: 16897968.0
(22) Date of filing: 25.11.2016
(51) Int. Cl.: B29D 30/06, B60C 11/12, B60C 11/11

(54) **TIRE MOLD AND TIRE**
REIFENFORM UND REIFEN
MOULE POUR PNEU ET PNEU

(30) Priority: 06.04.2016 JP 2016076377
(43) Date of publication of application: 13.02.2019
(73) Proprietor: Bridgestone Corporation, Tokyo 104-8340 (JP)
(72) Inventor: KAJI Yoshio, Tokyo 104-8340 (JP)
(74) Representative: Oxley, Robin John George
(86) International application number: PCT/JP2016/084919
(87) International publication number: WO 2017/175416

(56) References cited:
- EP-A1- 1 782 970
- JP-A- H11 310 012
- JP-A- H11 310 012
- JP-A- 2003 145 545
- JP-A- 2005 262 973
- JP-A- 2005 262 973
- JP-A- 2011 016 447
- JP-A- 2013 112 130
- US-A1- 2002 053 383

## Description

### [Technical Field]

The present invention relates to a tire mold and a tire, in particular, a sipe opened to a wheel tread portion of a tire.

### [Background Art]

A sipe is a cut opened to a wheel tread portion of a tire. The sipe is formed by a blade having a thin plate shape embedded in a vulcanizing mold for a tire. The sipe is served to remove a water screen formed between the wheel tread portion of the tire and a road surface when the tire travels on an ice and to enhance a resistance of the tire against the road surface. Conventionally, a tire in which a projection or a recess having various configurations is formed on a wall surface of the sipe so as to remove the water screen and to enhance draining performance is known.

For example, a fine concave and convex having a satin finished surface is formed on an inner wall surface of a sipe is disclosed in Patent Literature 1. Accordingly, surface tension of water entered into the sipe is relaxed so that the water in the sipe flows easily. Consequently, draining performance is improved. Attention is also drawn to the disclosures of JPH11-310012A, JP2005-262973A and EP 1782970A1.

### [Citation List]

### [Patent Literature]

[PTL 1] Japanese Unexamined Patent Application Publication No. 2004-224213

### [Summary of Invention]

### [Problems to be Solved by the Invention]

However, Patent Literature 1 does not disclose a dimensional relationship, a positional relationship, shapes, and sizes of a concave portion and a convex portion in a concave-convex surface. The convex portions facing each other on the inner wall surfaces are not meshed depending on the shape of the concave-convex surface, and therefore sufficient friction is not generated. Consequently, rigidity of a block in which the sipe is formed might be deteriorated.

An object of the present invention is, in consideration of the problem described above, to provide a tire mold and a tire that optimize a relationship between a concave portion and a convex portion formed in the sipe, so that rigidity of a block in which a sipe is formed is improved.

### [Means for Solving the Problems]

A tire mold according to a first aspect of the present invention is as claimed in claim 1.

In the first aspect, an average width length of the concave portions may be set in a range between 0.0005 mm and 0.5 mm in the concave-convex surface view. Further, an area of the concave portion may be set in a range between 0.0000002 mm² and 0.2 mm² in the concave-convex surface view. Further, a depth of the concave portion may be set in a range between 0.0001 mm and 0.25 mm.

In the first aspect, a first layer extended from one end to another end in a predetermined direction of the blade is formed on a side surface of the blade. The first layers are formed adjacent to each other in a direction orthogonal to the predetermined direction at an interval of 0.1 mm to 0.5 mm.

In the first aspect, a second layer extended from one end to another end in the predetermined direction of the blade may be formed on the side surface of the blade. The second layers may be formed between the first layers to be adjacent to each other in a direction orthogonal to the predetermined direction at an interval of 0.035 mm to 0.165 mm.

In the first aspect, a longer side length of the convex portion may be set in a range between 0.085 mm and 0.4 mm, and a shorter side length of the convex portion is set in a range between 0.035 mm and 0.165 mm. Further, the convex portions may be formed in a predetermined direction of the blade at an interval of 0.035 mm to 0.165 mm.

A tire according to a second aspect of the present invention is as claimed in claim 5.

In the second aspect, an average width length of the convex portions may be set in a range between 0.0005 mm and 0.5 mm in the concave-convex surface view. Further an area of the convex portion may be set in a range between 0.0000002 mm² and 0.2 mm² in the concave-convex surface view. Further, a depth of the convex portion may be set in a range between 0.0001 mm and 0.25 mm.

In the second aspect, a groove extended from one side to another side in a predetermined direction of the sipe is formed on each of the inner wall surfaces facing each other of the sipe. The grooves are formed in a direction orthogonal to the predetermined direction to be adjacent to each other at an interval of 0.1 mm to 0.5 mm.

In the second aspect, a longer side length of the concave portion may be set in a range between 0.085 mm and 0.4 mm, and a shorter side length of the concave portion is set in a range between 0.035 mm and 0.165 mm. Further, the concave portions may be formed in a predetermined direction of the sipe at an interval of 0.035 mm and 0.165 mm.

### [Effects of the Invention]

According to the present invention, rigidity of the block in which the sipe is formed can be improved.

### [Brief Description of Drawings]

[Fig. 1] Fig. 1 is a plane view illustrating a tread surface of a tire according to an embodiment of the present invention.
[Fig. 2] Fig. 2 is a schematic partial cross-sectional view of a tire mold according to the embodiment of the present invention.
[Fig. 3] Fig. 3 is a perspective view of a blade according to the embodiment of the present invention.
[Fig. 4] Fig. 4(a) is an enlarged view of a region T of the blade according to the embodiment of the present invention. Fig. 4(b) is a cross-sectional view taken along line A-A shown in Fig. 4(a).
[Fig. 5] Fig. 5 is a graph illustrating a relationship between arithmetic average roughness Ra and a friction coefficient µ.
[Fig. 6] Fig. 6 is a graph illustrating a relationship between a arithmetic average roughness Ra and rigidity of a block.

### [Description of Embodiments]

Hereinafter, an embodiment of the present invention is described with reference to the drawings. In the description of the drawings, the same reference numeral is assigned to the same part, and the description thereof is therefore omitted.

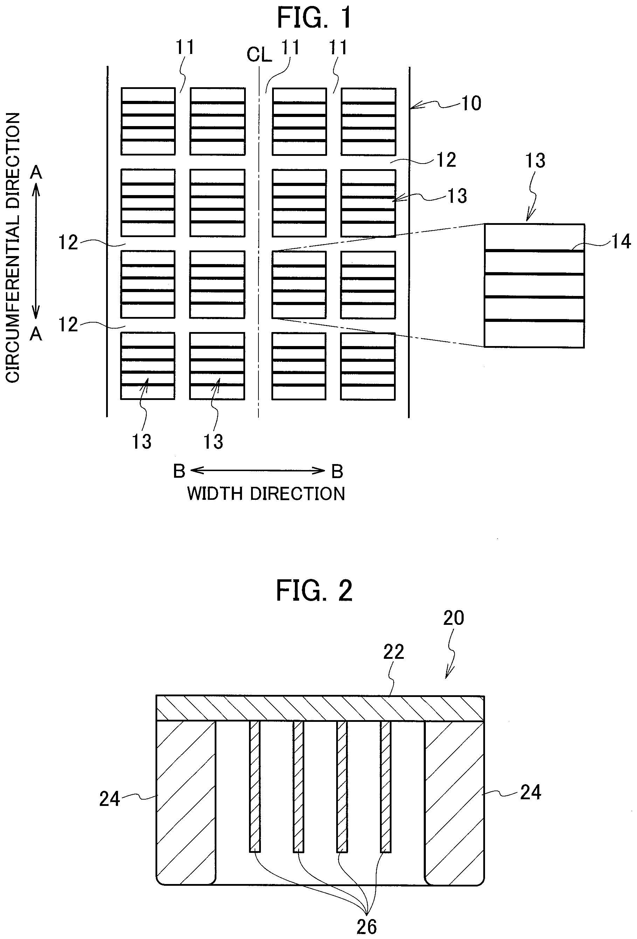

A configuration of a tire 10 according to the present embodiment is described with reference to Fig. 1. A tread pattern formed by a plurality of blocks 13 defined by a plurality of circumferential direction grooves 11 extended along a tire circumferential direction shown by an arrow A and a plurality of lateral grooves 12 crossing the circumferential direction groove 11 is formed on a tread surface of the tire 10. The lateral groove 12 is extended along a tire width direction shown by an arrow B.

A plurality of sipes 14 is formed on a wheel tread portion of the block 13. Specifically, the sipe 14 is formed linearly in a tire width direction. Here, the shape of the sipe 14 is not limited to a linear shape. The sipe 14 may be formed in a zigzag shape, a corrugated shape, or a crank shape.

Next, a configuration of a tire mold 20 is described with reference to Fig. 2. The tire mold 20 is a mold having a mold surface for vulcanizing and molding the tire 10. As shown in Fig. 2, the tire mold 20 includes a block surface molding portion 22 for molding a surface of each block 13 that forms the tread pattern, a bone portion 24 for molding the circumferential direction grooves 11 and the lateral grooves 12 of the tread pattern, and a plurality of blades 26 for molding a plurality of the sipes 14. The blades 26 are arranged on each block surface molding portion 22 with a gap therebetween. A concave-convex surface is formed on a side surface of the blade 26.

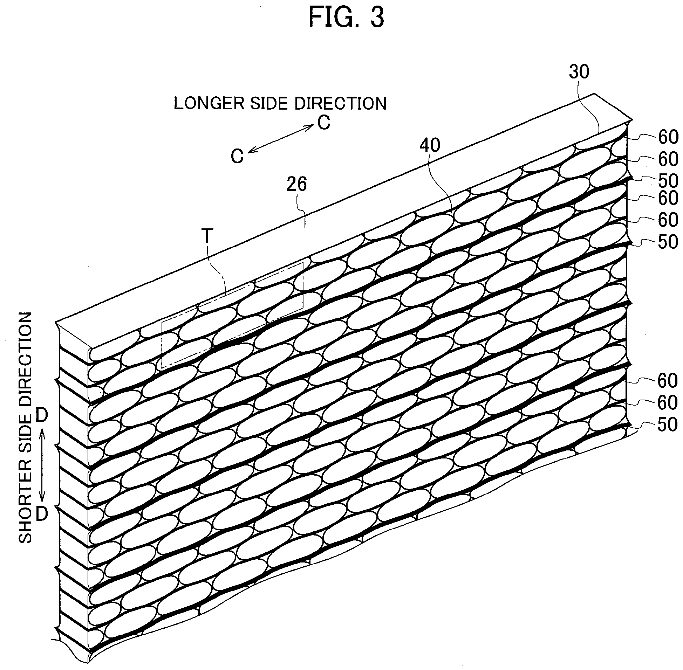

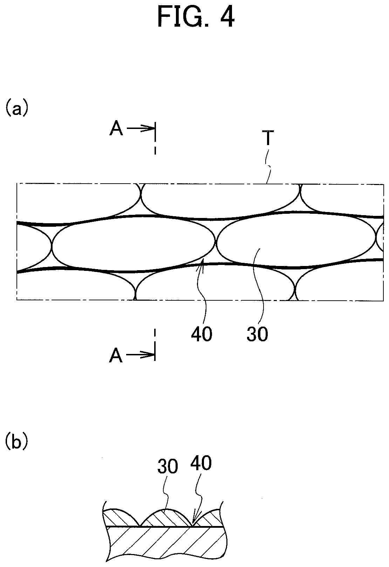

The tire 10 is manufactured by being vulcanized and molded by the tire mold 20. Further, when rubber is entered into the concave-convex surface of the blade 26, a concave-convex surface is formed on each of inner wall surfaces facing each other of the sipe 14 (hereinafter, merely referred to as an inner wall surface of the sipe 14). The concave-convex surface of the blade 26 is described with reference to Fig. 3, and Figs. 4(a) and 4(b).

As shown in Fig. 3, the blade 26 is formed in a plate shape having a plate thickness corresponding to a width of the sipe 14. A convex portion 30 and a concave portion 40 are formed on the side surface of the blade 26. The convex portion 30 and the concave portion 40 are transferred so as to form the concave-convex surface of the inner wall surface of the sipe 14.

Further, as shown in Fig. 3, the convex portions 30, each of which has an oval shape, are continuously formed along a longitudinal direction (tire width direction) of the blade 26 shown by an arrow C, on the side surface of the blade 26. Further, the convex portions 30 are laminated along a depth direction (tire radial direction) of the blade 26 shown by an arrow D. In the present embodiment, the convex portion 30 is formed in an oval shape, however a shape of the convex portion 30 is not limited to an oval shape, and therefore the convex portion 30 may be formed in other shape. Further, the convex portions 30 arranged adjacent to each other may be overlapped with each other. The blade 26 is relatively easily manufactured by using, for example, a precision casting method using a collapsible mold formed of plaster or the like, an electroforming method (a manufacturing method of a metal product using electroplating), a diffusion bonding method (a bonding method using diffusion of atoms caused between bonded surfaces while pressurizing base materials to adhere to each other to such an extent in which plastic deformation is hardly caused at a temperature less than a melting point of the base material), or a lamination forming method.

Further, as shown in Fig. 3 and Fig. 4(a), the concave portions 40 are formed between the convex portions 30 adjacent to each other. In other words, the concave portions 40 are formed irregularly to make a coarse-dense distribution and to fill a gap between the convex portions 30 adjacent to each other.

A longer side length of the convex portion 30 is set in a range between 0.085 mm and 0.4 mm. A shorter side length of the convex portion 30 is set in a range between 0.035 mm and 0.165 mm. The longer side length of the convex portion 30 is preferably set in a range between 0.125 mm and 0.375 mm. The shorter side length of the convex portion 30 is preferably set in a range between 0.05 mm and 0.15 mm. The longer side length of the convex portion 30 is more preferably set in a range between 0.165 mm and 0.335 mm. The shorter side length of the convex portion 30 is more preferably set in a range between 0.065 mm and 0.135 mm. Further, the convex portions 30 are formed at an interval of 0.035 mm to 0.165 mm in the depth direction of the blade 26.

An average width length of the concave portions 40 is set in a range between 0.0005 mm and 0.5 mm when the side surface of the blade 26 is seen from the front thereof (concave-convex surface view). Here, the average width length of the concave portions 40 is not a length in a width direction defined by the longitudinal direction of the blade 26 but an average length of a length of a maximum length portion and a length of a minimum length portion of the concave portion 40 having an outline of a polygonal shape. Further, the average width length of the concave portions 40 is preferably set in a range between 0.005 mm and 0.35 mm. The average width length of the concave portions 40 is more preferably set in a range between 0.05 mm and 0.2 mm. Further, an area of the concave portion 40 is set in a range between 0.0000002 mm² and 0.2 mm². The area of the concave portion 40 is preferably set in a range between 0.00002 mm² and 0.1 mm². The area of the concave portion 40 is more preferably set in a range between 0.002 mm² and 0.03 mm². Further, a depth of the concave portion 40 is set in a range between 0.0001 mm and 0.25 mm. The depth of the concave portion 40 is preferably set in a range between 0.0025 mm and 0.18 mm. The depth of the concave portion 40 is more preferably set in a range between 0.005 mm and 0.12 mm. Further, a height of the convex portion 30 is set in a range between 0.0001 mm and 0.25 mm. The height of the convex portion 30 is preferably set in a range between 0.0025 mm and 0.18 mm. The height of the convex portion 30 is more preferably set in a range between 0.005 mm and 0.12 mm.

The shape of the outline of the concave portion 40 is not a circular shape and an oval shape but a polygonal shape having many sides and having many concave-convex surfaces on the outline. Further, as shown in Fig. 4(b), the concave portion 40 is formed in a sharp shape having a sharp distal end toward the side surface of the blade 26. In other words, the concave portion 40 is sharp in a depth direction of the concave portion 40.

Further, a length of the concave portion 40 is smaller than a length of the convex portion 30 when the side surface of the blade 26 is seen from the front thereof.

Further, as shown in Fig. 3, a first layer 50 and a second layer 60 are formed on the side surface of the blade 26. Specifically, each of the first layer 50 and the second layer 60 is formed as a layer extended from one end to another end of the blade 26 along the longitudinal direction of the blade 26. The first layer 50 and the second layer 60 are formed when the blade 26 is manufactured by using the method described above. Further, a shape of each of the first layer 50 and the second layer 60 is formed in a corrugated shape.

As shown in Fig. 3, the first layers 50 are formed in a step-like shape so as to be adjacent to each other at an interval of 0.1 mm to 0.5 mm in the depth direction of the blade 26. The first layers 50 are preferably formed to be adjacent to each other at an interval of 0.15 mm to 0.45 mm in the depth direction of the blade 26. The first layers 50 are more preferably formed to be adjacent to each other at an interval of 0.2 mm to 0.4 mm.

As shown in Fig. 3, the second layers 60 are formed between the first layers 50 at an interval smaller than that of the first layers 50. The second layers 60 are formed in a step-like shape so as to be adjacent to each other at an interval of 0.035 mm to 0.165 mm in the depth direction of the blade 26. The second layers 60 are preferably formed to be adjacent to each other at an interval of 0.05 mm to 0.15 mm in the depth direction of the blade 26. The second layers 60 are more preferably formed to be adjacent to each other at an interval of 0.065 mm to 0.135 mm in the depth direction of the blade 26.

Next, a concave-convex surface (not shown) formed on the inner wall surface of the sipe 14 is described. Hereinafter, a convex portion formed on the inner wall surface of the sipe 14 is merely called a convex portion of the sipe 14, or a convex portion. Further, a concave portion formed on the inner wall surface of the sipe 14 is merely called a concave portion of the sipe 14, or a concave portion.

The concave portions, each of which has an oval shape, are continuously formed on the inner wall surface of the sipe 14, along the longitudinal direction (tire width direction) of the sipe 14. Further, the concave portions are laminated along a depth direction (tire radial direction) of the sipe 14. In the present embodiment, the concave portion of the sipe 14 is formed in an oval shape, however the shape of the concave portion is not limited to the oval shape, and therefore the concave portion may be formed in other shape. Further, the concave portions of the sipe 14 adjacent to each other may be overlapped with each other.

Further, the convex portions are formed between the concave portions adjacent to each other. In other words, the convex portions of the sipe 14 are formed irregularly to make a coarse-dense distribution and to fill a gap between the concave portions adjacent to each other.

A shape of an outline of the concave portion of the sipe 14 is not a circular shape and an oval shape but a polygonal shape having many sides and having many concave-convex surfaces on the outline. Further, the convex portion of the sipe 14 is formed in a sharp shape having a sharp distal end toward the inner side wall facing the sipe 14. In other words, the convex portion of the sipe 14 is sharp in a depth direction of the convex portion of the sipe 14.

An average width length of the convex portions of the sipe 14 is set in a range between 0.0005 mm and 0.5 mm when the inner wall surface of the sipe 14 is seen from the front thereof (concave-convex surface view). The average width length of the convex portions of the sipe 14 is preferably set in a range between 0.005 mm and 0.35 mm. The average width length of the convex portions of the sipe 14 is more preferably set in a range between 0.05 mm and 0.2 mm. Here, an area of the convex portion of the sipe 14 is set in a range between 0.0000002 mm² and 0.2 mm². The area of the convex portion of the sipe 14 is preferably set in a range between 0.00002 mm² and 0.1 mm². The area of the convex portion of the sipe 14 is more preferably set in a range between 0.002 mm² and 0.03 mm². Further, a height of the convex portion of the sipe 14 is set in a range between 0.0001 mm and 0.25 mm. The height of the convex portion of the sipe 14 is preferably set in a range between 0.0025 mm and 0.18 mm. The height of the convex portion of the sipe 14 is more preferably set in a range between 0.005 mm and 0.12 mm.

A longer side length of the concave portion of the sipe 14 is set in a range between 0.085 mm and 0.4 mm. A shorter side length of the concave portion of the sipe 14 is set in a range between 0.035 mm and 0.165 mm. The longer side length of the concave portion of the sipe 14 is preferably set in a range between 0.125 mm and 0.375 mm. The shorter side length of the concave portion of the sipe 14 is preferably set in a range between 0.05 mm and 0.15 mm. The longer side length of the concave portion of the sipe 14 is more preferably set in a range between 0.165 mm and 0.335 mm. The shorter side length of the concave portion of the sipe 14 is more preferably set in a range between 0.065 mm and 0.135 mm. Further, the concave portions of the sipe 14 are formed at an interval of 0.035 mm to 0.165 mm in the depth direction of the sipe 14.

Further, a length of the convex portion of the sipe 14 is smaller than a length of the concave portion of the sipe 14 when the inner wall surface of the sipe 14 is seen from the front thereof.

Further, layers to which the first layer 50 and the second layer 60 shown in Fig. 3 are transferred are formed on the inner wall surface of the sipe 14. Hereinafter, a layer to which the first layer 50 is transferred is called a first layer formed in the sipe 14. Further, a layer to which the second layer 60 is transferred is called a second layer formed in the sipe 14. Each of the first layer and the second layer formed in the sipe 14 is extended from one end to another end of the sipe 14 in the longitudinal direction of the sipe 14. Further, each shape of the first layer and the second layer formed in the sipe 14 is formed in a corrugated shape.

The first layers formed in the sipe 14 are formed in a step-like shape so as to be adjacent to each other at an interval of 0.1 mm to 0.5 mm in the depth direction of the sipe 14. The first layers formed in the sipe 14 are preferably formed to be adjacent to each other at an interval of 0.15 mm to 0.45 mm. The first layers formed in the sipe 14 are more preferably formed to be adjacent to each other at an interval of 0.2 mm to 0.4 mm.

Further, the second layers formed in the sipe 14 are formed between the first layers formed in the sipe 14 at an interval smaller than that of the first layers formed in the sipe 14. The second layers formed in the sipe 14 are formed in a step-like shape so as to be adjacent to each other at an interval of 0.035 mm to 0.165 mm. The second layers formed in the sipe 14 are preferably formed to be adjacent to each other at an interval of 0.05 mm to 0.15 mm. The second layers formed in the sipe 14 are more preferably formed to be adjacent to each other at an interval of 0.065 mm to 0.135 mm.

### Functions and effects

As described above, according to the present embodiment, the following functions and effects can be obtained.

The convex portion 30 and the concave portion 40 formed in the blade 26 are transferred, so that the sharp convex portion is formed on the inner wall surface of the sipe 14. Accordingly, when the bending deformation of the block 13 is caused in braking or driving of the tire 10, a relatively large friction resistance is generated due to a contact between the convex portions on the inner wall surface of the sipe 14. Consequently, rigidity of the block 13 (hereinafter, merely referred to as block rigidity) in which the sipe 14 is formed is improved. Thus, the deformation of the block 13 is suppressed.

Further, the first layers 50 formed in the blade 26 are transferred, so that the first layers are formed in a step-like shape on the inner wall surface of the sipe 14. When the bending deformation of the block 13 is caused in braking or driving of the tire 10, the first layers formed in a step-like shape mutually support the inner wall surface of the sipe 14. Consequently, the block rigidity is improved.

Further, the second layers 60 formed in the blade 26 are transferred, so that the second layers are formed in a step-like shape on the inner wall surface of the sipe 14. The second layer formed in the sipe 14 is formed between the first layers formed in the sipe 14. When the bending deformation of the block 13 is caused in braking or driving of the tire 10, the first layer and the second layer formed in a step-like shape mutually support the inner wall surface of the sipe 14. Consequently, the block rigidity is further improved.

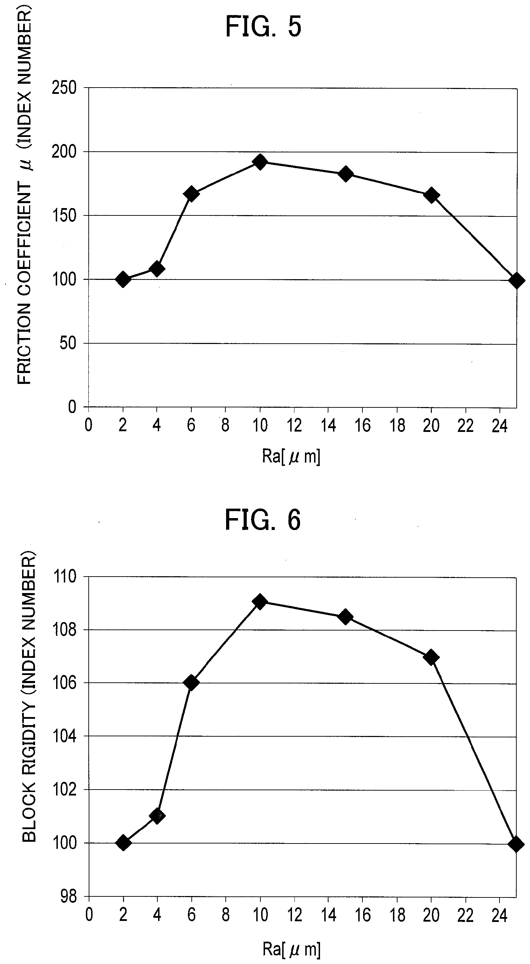

Further, arithmetic average roughness Ra of the concave-convex surface formed in the blade 26 (hereinafter, it is similarly applied to the transferred concave-convex surface in the sipe 14) is preferably set in a range between 6 µm and 20 µm. As shown in Fig. 5, in a case in which the arithmetic average roughness Ra is set in a range between 6 µm and 20 µm, a friction coefficient µ between rubber and rubber is largely improved. This is because rubber surfaces are meshed with each other when the arithmetic average roughness Ra is set in the range between 6 µm and 20 µm. On the other hand, in a case in which the arithmetic average roughness Ra is less than 6 µm, the rubber surfaces are excessively smooth and slippery. Consequently, the rubber surfaces are not meshed with each other. Further, in a case in which the arithmetic average roughness Ra is more than 20 µm, the rubber surfaces are excessively rough and a large gap is generated. Consequently, the rubber surfaces are not meshed with each other. Here, an evaluation length, a reference length, and the like relating to the arithmetic average roughness Ra in the present embodiment are based on JIS standard.

Further, in a case in which the arithmetic average roughness Ra is in the range between 6 µm and 20 µm, the friction coefficient µ between rubber and rubber is largely improved, and therefore the block rigidity is largely improved as shown in Fig. 6.

With the lengths of the convex portion 30 and the concave portion 40 described above, the arithmetic average roughness Ra of the concave-convex surface is set in the range between 6 µm and 20 µm.

### Evaluation result

Hereinafter, an evaluation result is described. Specifically, samples described below were prepared, and the friction coefficient µ (index number) between rubbers, the block rigidity (index number), and DRY braking performance (index number) of each sample were measured.

As the samples, a sample according to a conventional example, samples according to comparative examples 1 and 2, and samples according to examples 1 to 6 were prepared. A tire size of each sample is 195/65R15, and a parameter of each sample is shown in Table 1.

### Friction coefficient µ

In a friction test, the friction coefficient µ between rubbers was measured. A measured result is shown in Table 1. The measured result is indexed as the result of the sample according to the conventional example 1 is defined as 100. As the value is larger, the friction coefficient µ is superior.

### Block rigidity

In a block rigidity test, the block rigidity was measured. A measured result is shown in Table 1. The measured result is indexed as the result of the sample according to the conventional example 1 is defined as 100. As the value is larger, the block rigidity is superior.

### DRY braking performance

In a DRY braking test, a stop distance was measured by braking at a speed of 100 km/h on a dry road surface. A measured result is shown in Table 1. The measured result is indexed as the result of the sample according to the conventional example 1 is defined as 100. As the value is larger, the DRY braking performance is superior.

**Table 1**

| | Conventional example Ra = 2 | Compar ative example 1 Ra = 5 | Example 1 Ra = 6 | Example 2 Ra = 8 | Example 3 Ra = 10 | Example 4 Ra = 15 | Example 5 Ra = 18 | Example 6 Ra = 24 | Comparative example 2 Ra = 25 |
|---|---|---|---|---|---|---|---|---|---|
| Friction coefficient µ | 100 | 135 | 170 | 178 | 190 | 180 | 172 | 110 | 100 |
| Block rigidity | 100 | 103.5 | 106 | 107.5 | 109 | 108.5 | 107.5 | 100.5 | 100 |
| DRY braking performance | 100 | 101 | 103 | 104 | 105 | 105 | 104 | 104 | 100 |

In the tire according to the conventional example shown in Table 1, the convex portion and the concave portion formed in the sipe of the present embodiment are not formed. Further, in the tires according to the examples 1 and 6 shown in Table 1, each of the convex portion 30 and the concave portion 40 of the blade 26 is set in the following length. That is, the longer side length of the convex portion 30 is set in a range between 0.085 mm and 0.4 mm, the shorter side length of the convex portion 30 is set in a range between 0.035 mm and 0.165 mm, the average width length of the concave portions 40 is set in a range between 0.0005 mm and 0.5 mm, the area of the concave portion 40 is set in a range between 0.0000002 mm² and 0.2 mm², and the depth of the concave portion 40 is set in a range between 0.0001 mm and 0.25 mm.

Further, in the tires according to the examples 2 and 5 shown in Table 1, each of the convex portion 30 and the concave portion 40 of the blade 26 is set in the following length. That is, the longer side length of the convex portion 30 is set in a range between 0.125 mm and 0.375 mm, the shorter side length of the convex portion 30 is set in a range between 0.05 mm and 0.15 mm, the average width length of the concave portions 40 is set in a range between 0.005 mm and 0.35 mm, the area of the concave portion 40 is set in a range between 0.00002 mm² and 0.1 mm², and the depth of the concave portion 40 is set in a range between 0.0025 mm and 0.18 mm.

Further, in the tire according to the examples 3 and 4 shown in Table 1, each of the convex portion 30 and the concave portion 40 of the blade 26 is set in the following length. That is, the longer side length of the convex portion 30 is set in a range between 0.165 mm and 0.335 mm, the shorter side length of the convex portion 30 is set in a range between 0.065 mm and 0.135 mm, the average width length of the concave portions 40 is set in a range between 0.05 mm and 0.2 mm, the area of the concave portion 40 is set in a range between 0.002 mm² and 0.03 mm², and the depth of the concave portion 40 is set in a range between 0.005 mm and 0.12 mm.

Further, in the tires according to the comparative examples 1 and 2 shown in Table 1, each the convex portion 30 and the concave portion 40 is set out of the range of each of the convex portion 30 and the concave portion 40 of the tires according to the examples 1 and 6 shown in Table 1.

According to the result shown in Table 1, in the tires according to the examples 1 to 6, the friction coefficient, the block rigidity, and the DRY braking performance are superior compared to those of the tires according to the conventional example and the comparative examples 1 and 2.

As described above, the embodiment of the present invention is described, however the present invention is not limited to the description and the drawings forming a part of the present disclosure. Various modifications, examples, and operation techniques will be apparent from the present disclosure to a person skilled in the art.

For example, in the present embodiment, the convex portions 30 are formed continuously along the longitudinal direction of the blade 26, however it is not limited to this. The convex portions 30 may be formed continuously along the depth direction of the blade 26. In a case in which the convex portions 30 are formed continuously along the depth direction of the blade 26, the convex portions 30 are laminated along the longitudinal direction of the blade 26. Further, in a case in which the convex portions 30 are formed continuously along the depth direction of the blade 26, each of the first layer 50 and the second layer 60 is extended along the depth direction of the blade 26 from one end to another end of the blade 26. Further, in a case in which the convex portions 30 are formed continuously along the depth direction of the blade 26, each of the first layers 50 and the second layers 60 are formed in a step-like shape so as to be adjacent to each other at a predetermined interval in the longitudinal direction of the blade 26. In other words, each of the first layers 50 and the second layers 60 are formed in a step-like shape so as to be adjacent to each other at a predetermined interval in a direction orthogonal to its extending direction (predetermined direction).

Further, the convex portions 30 may be formed continuously along a certain direction of the blade 26. In a case in which the convex portions 30 are formed continuously along a certain direction of the blade 26, the convex portions 30 are laminated in a direction orthogonal to the certain direction.

### [Reference Signs List]

- 10:: tire
- 11:: circumferential direction groove
- 12:: lateral groove
- 13:: block
- 14:: sipe
- 20:: tire mold
- 22:: block surface molding portion
- 24:: bone portion
- 26:: blade
- 30:: convex portion
- 40:: concave portion
- 50:: first layer
- 60:: second layer

## Claims

1. A tire mold (20) comprising:
a mold surface that vulcanizes and molds a tire (10); and
a blade (26) that vulcanizes and molds a sipe (14) in the tire (10), the blade (26) being formed on the mold surface,
wherein:
the blade (26) includes a concave-convex surface in which a plurality of convex portions (30) formed adjacent to each other and a plurality of concave portions (40) formed between the convex portions (30) adjacent to each other are formed;
a length of the concave portion (40) is smaller than a length of the convex portion (30) in a concave-convex surface view;
the concave portion (40) is formed in a shape having a sharp distal end in a depth direction of the concave portion (40);
a first layer (50) extended from one end to another end in a predetermined direction of the blade (26) is formed on a side surface of the blade (26); and
multiple first layers (50) are formed adjacent to each other in a direction orthogonal to the predetermined direction at an interval of 0.1 mm to 0.5 mm.

2. The tire mold (20) according to claim 1, wherein:
an average width length of the concave portions (40) is set in a range between 0.0005 mm and 0.5 mm in the concave-convex surface view;
an area of the concave portion (40) is set in a range between 0.0000002 mm² and 0.2 mm² in the concave-convex surface view; and
a depth of the concave portion (40) is set in a range between 0.0001 mm and 0.25 mm.

3. The tire mold (20) according to claim 1 or 2, wherein:
a second layer (60) extended from one end to another end in the predetermined direction of the blade (26) is formed on the side surface of the blade (26); and
the second layers (60) are formed between the first layers (50) to be adjacent to each other in a direction orthogonal to the predetermined direction at an interval of 0.035 mm to 0.165 mm.

4. The tire mold (20) according to any one of claims 1 to 3, wherein:
a longer side length of the convex portion (30) is set in a range between 0.085 mm and 0.4 mm;
a shorter side length of the convex portion (30) is set in a range between 0.035 mm and 0.165 mm; and
the convex portions (30) are formed in a predetermined direction of the blade (26) at an interval of 0.035 mm to 0.165 mm.

5. A tire (10) comprising:
a tread surface;
a plurality of circumferential direction grooves (11) formed on the tread surface and extended in a tire circumferential direction;
a plurality of lateral grooves (12) formed on the tread surface and extended in a tire width direction, the lateral groove (12) crossing the circumferential direction groove;
a block (13) formed in the tread surface and defined by a plurality of the circumferential direction grooves (11) and a plurality of the lateral grooves (12); and
a plurality of sipes (14) extended in the tire width direction and formed in the block (13),
wherein:
each of inner wall surfaces facing each other of the sipe (14) includes a concave-convex surface in which a plurality of concave portions formed adjacent to each other and a plurality of convex portions formed between the concave portions adjacent to each other are formed;
a length of the convex portion is smaller than a length of the concave portion in a concave-convex surface view;
the convex portion is formed in a shape having a sharp distal end in a depth direction of the convex portion;
a groove extended from one side to another side in a predetermined direction of the sipe (14) is formed on each of the inner wall surfaces facing each other of the sipe (14); and
multiple grooves are formed in a direction orthogonal to the predetermined direction to be adjacent to each other at an interval of 0.1 mm to 0.5 mm.

6. The tire (10) according to claim 5, wherein:
an average width length of the convex portions is set in a range between 0.0005 mm and 0.5 mm in the concave-convex surface view;
an area of the convex portion is set in a range between 0.0000002 mm² and 0.2 mm² in the concave-convex surface view; and
a depth of the convex portion is set in a range between 0.0001 mm and 0.25 mm.

7. The tire (10) according to claim 5 or 6, wherein:
a longer side length of the concave portion is set in a range between 0.085 mm and 0.4 mm;
a shorter side length of the concave portion is set in a range between 0.035 mm and 0.165 mm; and
the concave portions are formed in a predetermined direction of the sipe (14) at an interval of 0.035 mm and 0.165 mm.

## Patentansprüche

1. Reifenform (20), die Folgendes umfasst:
eine Formoberfläche, die einen Reifen (10) vulkanisiert und formt, und
ein Blatt (26), das eine Lamelle (14) in dem Reifen (10) vulkanisiert und formt, wobei das Blatt (26) auf der Formoberfläche geformt ist,
wobei:
das Blatt (26) eine konkav-konvexe Oberfläche einschließt, in der eine Mehrzahl von konvexen Abschnitten (30), die aneinander angrenzend geformt sind, und eine Mehrzahl von konkaven Abschnitten (40), die zwischen den aneinander angrenzenden konvexen Abschnitten (30) geformt sind, geformt sind,
eine Länge des konkaven Abschnitts (40) in einer Ansicht der konkav-konvexen Oberfläche kleiner ist als eine Länge des konvexen Abschnitts (30),
der konkave Abschnitt (40) in eine Gestalt geformt ist, die in einer Tiefenrichtung des konkaven Abschnitts (40) ein spitzes distales Ende aufweist,
eine erste Lage (50), die sich von einem Ende bis zu einem anderen Ende in einer vorbestimmten Richtung des Blattes (26) erstreckt, auf einer Seitenfläche des Blattes (26) geformt ist, und
mehrere erste Lagen (50) aneinander angrenzend in einer Richtung, senkrecht zu der vorbestimmten Richtung, in einem Abstand von 0,1 mm bis 0,5 mm geformt sind.

2. Reifenform (20) nach Anspruch 1, wobei:
eine durchschnittliche Breitenlänge der konkaven Abschnitte (40) in einem Bereich zwischen 0,0005 mm und 0,5 mm in der Ansicht der konkav-konvexen Oberfläche festgesetzt ist,
eine Fläche des konkaven Abschnitts (40) in einem Bereich zwischen 0,0000002 mm² und 0,2 mm² in der Ansicht der konkav-konvexen Oberfläche festgesetzt ist und
eine Tiefe des konkaven Abschnitts (40) in einem Bereich zwischen 0,0001 mm und 0,25 mm festgesetzt ist.

3. Reifenform (20) nach Anspruch 1 oder 2, wobei:
eine zweite Lage (60), die sich von einem Ende bis zu einem anderen Ende in der vorbestimmten Richtung des Blattes (26) erstreckt, auf der Seitenfläche des Blattes (26) geformt ist, und
die zweiten Lagen (60) zwischen den ersten Lagen (50) so geformt sind, dass sie in einer Richtung, senkrecht zu der vorbestimmten Richtung, in einem Abstand von 0,035 mm bis 0,165 mm aneinander angrenzen.

4. Reifenform (20) nach einem der Ansprüche 1 bis 3, wobei:
eine längere Seitenlänge des konvexen Abschnitts (30) in einem Bereich zwischen 0,085 mm und 0,4 mm festgesetzt ist,
eine kürzere Seitenlänge des konvexen Abschnitts (30) in einem Bereich zwischen 0,035 mm und 0,165 mm festgesetzt ist, und
die konvexen Abschnitte (30) in einer vorbestimmten Richtung des Blattes (26) in einem Abstand von 0,035 mm bis 0,165 mm geformt sind.

5. Reifen (10), der Folgendes umfasst:
eine Lauffläche,
eine Mehrzahl von Umfangsrichtungsrillen (11), die auf der Lauffläche geformt sind und sich in einer Reifenumfangsrichtung erstrecken,
eine Mehrzahl von seitlichen Rillen (12), die auf der Lauffläche geformt sind und sich in einer Reifenbreitenrichtung erstrecken, wobei die seitliche Rille (12) die Umfangsrichtungsrille kreuzt,
einen Block (13), der in der Lauffläche geformt ist und durch eine Mehrzahl der Umfangsrichtungsrillen (11) und eine Mehrzahl der seitlichen Rillen (12) definiert wird, und
eine Mehrzahl von Lamellen (14), die sich in der Reifenbreitenrichtung erstrecken und in dem Block (13) geformt sind,
wobei:
jede von den sich einander gegenüberliegenden inneren Wandflächen der Lamelle (14) eine konkav-konvexe Oberfläche einschließt, in der eine Mehrzahl von konkaven Abschnitten, die aneinander angrenzend geformt sind, und eine Mehrzahl von konvexen Abschnitten, die zwischen den aneinander angrenzenden konkaven Abschnitten geformt sind, geformt sind,
eine Länge des konvexen Abschnitts in einer Ansicht der konkav-konvexen Oberfläche kleiner ist als eine Länge des konkaven Abschnitts,
der konvexe Abschnitt in eine Gestalt geformt ist, die in einer Tiefenrichtung des konvexen Abschnitts ein spitzes distales Ende aufweist,
eine Rille, die sich von einer Seite bis zu einer anderen Seite in einer vorbestimmten Richtung der Lamelle (14) erstreckt, auf jeder von den sich einander gegenüberliegenden inneren Wandflächen der Lamelle (14) geformt ist, und
mehrere Rillen (50) in einer Richtung, senkrecht zu der vorbestimmten Richtung, so geformt sind, dass sie in einem Abstand von 0,1 mm bis 0,5 mm aneinander angrenzen.

6. Reifen (10) nach Anspruch 5, wobei:
eine durchschnittliche Breitenlänge der konvexen Abschnitte in einem Bereich zwischen 0,0005 mm und 0,5 mm in der Ansicht der konkav-konvexen Oberfläche festgesetzt ist,
eine Fläche des konvexen Abschnitts in einem Bereich zwischen 0,0000002 mm² und 0,2 mm² in der Ansicht der konkav-konvexen Oberfläche festgesetzt ist, und
eine Tiefe des konvexen Abschnitts in einem Bereich zwischen 0,0001 mm und 0,25 mm festgesetzt ist.

7. Reifen (10) nach Anspruch 5 oder 6, wobei:
eine längere Seitenlänge des konkaven Abschnitts in einem Bereich zwischen 0,085 mm und 0,4 mm festgesetzt ist,
eine kürzere Seitenlänge des konkaven Abschnitts in einem Bereich zwischen 0,035 mm und 0,165 mm festgesetzt ist, und
die konkaven Abschnitte in einer vorbestimmten Richtung der Lamelle (14) in einem Abstand von 0,035 mm bis 0,165 mm geformt sind.

## Revendications

1. Moule pour bandage pneumatique (20), comprenant :
une surface du moule assurant la vulcanisation et le moulage d'un bandage pneumatique (10) ; et
une lame (26) assurant la vulcanisation et le moulage d'une lamelle (14) dans le bandage pneumatique (10), la lame (26) étant formée sur la surface du moule ;
dans lequel :
la lame (26) inclut une surface concave-convexe, dans laquelle sont formées une pluralité de parties convexes (30) formées de manière adjacente les unes aux autres, et une pluralité de parties concaves (40) formées entre les parties convexes (30) formées de manière adjacente les unes aux autres ;
une longueur de la partie concave (40) est inférieure à une longueur de la partie convexe (30) dans une vue de la surface concave-convexe ;
la partie concave (40) est formée en une forme comportant une extrémité distale pointue dans une direction de la profondeur de la partie concave (40) ;
une première couche (50) s'étendant d'une extrémité vers une autre extrémité, dans une direction prédéterminée de la lame (26), est formée sur une surface latérale de la lame (26) ; et
de multiples premières couches (50) sont formées de manière adjacente les unes aux autres, dans une direction orthogonale à la direction prédéterminée, à un intervalle de 0,1 mm à 0,5 mm.

2. Moule pour bandage pneumatique (20) selon la revendication 1, dans lequel :
une longueur de largeur moyenne des parties concaves (40) est ajustée dans un intervalle compris entre 0,0005 mm et 0,5 mm dans la vue de la surface concave-convexe ;
une aire de la partie concave (40) est ajustée dans un intervalle compris entre 0,0000002 mm² et 0,2 mm² dans la vue de la surface concave-convexe ; et
une profondeur de la partie concave (40) est ajustée dans un intervalle compris entre 0,0001 mm et 0,25 mm.

3. Moule pour bandage pneumatique (20) selon les revendications 1 ou 2, dans lequel :
une deuxième couche (60) s'étendant d'une extrémité vers une autre extrémité, dans la direction prédéterminée de la lame (26), est formée sur la surface latérale de la lame (26) ; et
les deuxièmes couches (60) sont formées entre les premières couches (50) de sorte à être adjacentes les unes aux autres dans une direction orthogonale à la direction prédéterminée, à un intervalle de 0,035 mm à 0,165 mm.

4. Moule pour bandage pneumatique (20) selon l'une quelconque des revendications 1 à 3, dans lequel :
une longueur d'un côté plus long de la partie convexe (30) est ajustée dans un intervalle compris entre 0,085 mm et 0,4 mm ;
une longueur d'un côté plus court de la partie convexe (30) est ajustée dans un intervalle compris entre 0,035 mm et 0,165 mm ; et
les parties convexes (30) sont formées dans une direction prédéterminée de la lame (26), à un intervalle de 0,035 mm à 0,165 mm.

5. Bandage pneumatique (10), comprenant :
une surface de bande de roulement ;
une pluralité de rainures dans la direction circonférentielle (11) formées sur la surface de bande de roulement et s'étendant dans une direction circonférentielle du bandage pneumatique ;
une pluralité de rainures latérales (12) formées sur la surface de bande de roulement et s'étendant dans une direction de la largeur du bandage pneumatique, la rainure latérale (12) croisant la rainure dans la direction circonférentielle ;
un pavé (13) formé dans la surface de bande de roulement et défini par une pluralité des rainures dans la direction circonférentielle (11) et une pluralité des rainures latérales (12) ; et
une pluralité de lamelles (14) s'étendant dans la direction de la largeur du bandage pneumatique et formées dans le pavé (13) ;
dans lequel :
chacune des surfaces de paroi internes de la lamelle (14) se faisant mutuellement face inclut une surface concave-convexe dans laquelle sont formées une pluralité de parties concaves formées de manière adjacente les unes aux autres et une pluralité de parties convexes formées entre les parties concaves formées de manière adjacente les unes aux autres ;
une longueur de la partie convexe est inférieure à une longueur de la partie concave dans une vue de la surface concave-convexe ;
la partie convexe est formée en une forme comportant une extrémité distale pointue dans une direction de la profondeur de la partie convexe ;
une rainure s'étendant d'un côté vers un autre côté, dans une direction prédéterminée de la lamelle (14), est formée sur chacune des surfaces de paroi internes de la lamelle (14), se faisant mutuellement face; et
de multiples rainures sont formées dans une direction orthogonale à la direction prédéterminée, de sorte à être adjacentes les unes aux autres, à un intervalle de 0,1 mm à 0,5 mm.

6. Bandage pneumatique (10) selon la revendication 5, dans lequel :
une longueur de largeur moyenne des parties convexes est ajustée dans un intervalle compris entre 0,0005 mm et 0,5 mm dans la vue de la surface concave-convexe ;
une aire de la partie convexe est ajustée dans un intervalle compris entre 0,0000002 mm² et 0,2 mm² dans la vue de la surface concave-convexe ; et
une profondeur de la partie convexe est ajustée dans un intervalle compris entre 0,0001 mm et 0,25 mm.

7. Bandage pneumatique (10) selon les revendications 5 ou 6, dans lequel :
une longueur d'un côté plus long de la partie concave est ajustée dans un intervalle compris entre 0,085 mm et 0,4 mm ;
une longueur d'un côté plus court de la partie concave est ajustée dans un intervalle compris entre 0,035 mm et 0,165 mm; et
les parties concaves sont formées dans une direction prédéterminée de la lamelle (14), à un intervalle de 0,035 mm à 0,165 mm.
